# EUROPÄISCHE PATENTSCHRIFT

(11) **EP 3 088 312 B1**
(45) Veröffentlichungstag und Bekanntmachung des Hinweises auf die Patenterteilung: **03.01.2018**
(21) Anmeldenummer: 16170059.6
(22) Anmeldetag: 03.08.2010
(51) Int. Cl.: B65B 55/00, B67C 7/00, A23L 3/015

(54) **MASCHINE UND VERFAHREN ZUM VERPACKEN UND HOCHDRUCKBEHANDELN VON PRODUKTEN**
MACHINE AND METHOD FOR THE PACKAGING AND HIGH PRESSURE TREATMENT OF PRODUCTS
MACHINE ET PROCÉDÉ D'EMBALLAGE ET DE TRAITEMENT À HAUTE PRESSION DE PRODUITS

(30) Priorität: 18.09.2009 DE 102009042083
(43) Veröffentlichungstag der Anmeldung: 02.11.2016
(62) Teilanmeldung aus: 10008108.2
(73) Patentinhaber: MULTIVAC Sepp Haggenmüller SE & Co. KG, 87787 Wolfertschwenden (DE)
(72) Erfinder: RICHTER, Tobias, 87700 Memmingen (DE)
(74) Vertreter: Grünecker Patent- und Rechtsanwälte PartG mbB

(56) Entgegenhaltungen:
- EP-A1- 0 180 540
- WO-A1-2007/128281
- WO-A2-99/38394
- US-A- 5 593 714
- US-A1- 2006 257 552

## Beschreibung

Die vorliegende Erfindung bezieht sich auf eine Verpackungsmaschine und ein entsprechendes Verfahren, mit denen Produkte, insbesondere Lebensmittel, verpackt und anschließend unter Hochdruck behandelt werden.

Lebensmittel sind chemischen und biologischen Prozessen unterworfen, die ihre Zusammensetzung verändern und auch gesundheitsschädliche Substanzen erzeugen können. Beispielsweise können die Lebensmittel oxidieren, oder sie können durch Enzyme und Mikroorganismen, beispielsweise Schimmelpilze, verändert werden. Damit Lebensmittel für den Verbraucher sicher zu verzehren, transportierbar und möglichst lange haltbar sind, müssen diese Prozesse verhindert oder zumindest innerhalb der gewünschten Haltbarkeit ausreichend verzögert werden.

Eine Möglichkeit besteht darin, Lebensmittel stark zu zuckern, zu salzen oder zu trocknen, um dem Lebensmittel Wasser zu entziehen und so die Entwicklung von Mikroorganismen wie Schimmelpilzen oder Bakterien zu behindern. Auch die Zugabe von Alkohol oder Essig, der Zusatz von Konservierungsmitteln sowie das Kühlen bremsen die Entwicklung von Mikroorganismen und setzen die Aktivität von Enzymen herab. Ferner kann eine Hitzebehandlung dafür sorgen, dass Mikroorganismen abgetötet und schädliche Enzyme inaktiviert werden. Bei der Pasteurisation wird das Lebensmittel dabei für eine gewisse Zeit auf unter 100 °C erwärmt. Allerdings bleiben dabei die vergleichsweise resistenten Bakteriensporen weiterhin keimfähig, und es besteht die Gefahr, dass durch die Hitzebehandlung auch wichtige Nährstoffe und Aromen zerstört werden.

Eine weitere Methode zur Verlängerung der Haltbarkeit von Lebensmitteln besteht darin, die Lebensmittel in eine gasdichte Verpackung einzufüllen und die Verpackung vor dem Verschließen zu evakuieren. Gegebenenfalls kann der Verpackung noch ein Schutzgas oder - mischungen beigegeben werden, beispielsweise Stickstoff oder CO₂. Durch die Verdrängung der Luft, beispielsweise des Sauerstoffs, wird ebenfalls die Aktivität von Enzymen oder Mikroorganismen verlangsamt.

Ein zumindest in industriellem Maßstab bisher kaum genutztes Verfahren ist die (Ultra-) Hochdruckbehandlung von Lebensmitteln. Bei diesem Verfahren wird ein üblicherweise bereits verpacktes Lebensmittel über eine gewisse Zeitspanne, beispielsweise einige Minuten, sehr hohen Drücken von typischerweise 400 MPa bis 600 MPa unterworfen. Diese hohen Drücke sorgen dafür, dass schädliche Mikroorganismen im Lebensmittel zerstört und abgetötet werden. Kleinere Moleküle hingegen, wie Vitamine, die Geschmack und Nährwert des Lebensmittels bestimmen, werden durch die Hochdruckbehandlung kaum beeinflusst. Bei Fleischprodukten kann die Haltbarkeit so beispielsweise um den Faktor 6 bis 10 im Vergleich zum unbehandelten Produkt verlängert werden.

Gegenüber der Hitzebehandlung hat die Hochdruckbehandlung verschiedene Vorteile. Beispielsweise wird der Geschmack kaum verändert, und der Vitamingehalt im Lebensmittel ist nach einer Hochdruckbehandlung teilweise mehr als doppelt so hoch wie nach einer Hitzebehandlung. Einige hitzeempfindliche Produkte, beispielsweise Meeresfrüchte, lassen zudem überhaupt keine Hitzebehandlung zu. Pathogene Keime, wie Listerien, können sicher abgetötet werden, sodass die Lebensmittelsicherheit erhöht wird. Durch die Hochdruckbehandlung lässt sich die interne Struktur der Lebensmittel aber auch gezielt beeinflussen, sodass sich neuartige Produktmöglichkeiten, beispielsweise durch das Gelieren von Fruchtzubereitungen ohne Hitze, ergeben. Schließlich ist die Technologie zur Hochdruckbehandlung bereits in vielen Ländern als (Lebensmittel-) sicher anerkannt. Darüber hinaus ermöglicht die Hochdruckbehandlung eine längere Haltbarkeit von Lebensmitteln bei gleichzeitigem Verzicht auf Konservierungsstoffe. Hochdruckbehandelte Lebensmittel müssen nicht dauerhaft gekühlt werden, sondern sie können auch bei höheren Temperaturen als 4 bis 6 °Celsius gelagert werden. Gleichzeitig bleiben die hohen sensorischen und ernährungsphysiologischen Wertigkeiten (wie z. B. der Vitamingehalt) der Produkte bzw. Lebensmittel erhalten.

Bei der Hochdruckbehandlung von verpackten Lebensmitteln kann es durch die Prozessbedingungen zu Problemen mit der Verpackung kommen. So können optisch nachteilige Veränderungen und auch Schäden auftreten. Speziell Verpackungen mit Schutzgasatmosphäre bereiten durch den stark komprimierbaren Gasanteil in der Packung Probleme. Dies ist auch ein Grund dafür, dass bislang vorwiegend Vakuumverpackungen bei der Hochdruckbehandlung eingesetzt werden.

Die Inaktivierung von Mikroorganismen sowie die Strukturmodifikation von Lebensmittelbestandteilen werden beispielsweise beschrieben in der EP 0 588 010 A1, der EP 0 689 391 B1, der EP 0 752 211 B1, der EP 1 100 340 B1, der DE 42 26 255 A1, oder der DE 37 34 025 C2. Die EP 1 112 008 B1, EP 1 201 252 B1, DE 196 49 952 A1, DE 197 38 800 A1, DE 199 39 677 A1 und die DE 26 11 389 A1 beschreiben die Auswirkungen der Hochdruckbehandlungen auf die mikrobiologische Haltbarkeit und die Sicherheit von Lebensmitteln. Die Anwendung der Hochdruckbehandlung speziell auf Fleischerzeugnisse wird beschrieben in der DE 198 01 031 C2, DE 1 965 36 C1, EP 0 748 592 B1, EP 0 683 986 B1, DE 101 01 958 A1, DE 10 2005 011 868 A1, oder der WO 2006/097248 A1.

Eine Anlage zur Hochdruckbehandlung von Lebensmitteln ist darüber hinaus aus der WO 2006/129180 A1 bekannt. Dabei ist ein Autoklav mit einer Hochdruckkammer vorgesehen, in der die Lebensmittel einem Hochdruck ausgesetzt werden. Zum Aufbauen des Drucks muss der Autoklav verschlossen werden. Folglich kann die Anlage nicht kontinuierlich betrieben werden. Um den Durchsatz der Anlage zu erhöhen, wird sie typischerweise im Batch-Verfahren betrieben, bei dem die Produkte gruppenweise in den Autoklaven eingebracht, hochdruckbehandelt und entnommen werden.
Eine weitere Anlage zur Hochdruckbehandlung von Produkten geht aus der EP 0 687 421 A1 hervor. Bei dieser Anlage sind eine Hochdruckkammer und eine Niederdruckkammer vorgesehen.

Dokument US2006/0257552 offenbart eine Verpackungsmaschine gemäß dem Oberbegriff des Anspruchs 1. Eine Hochdruckanlage, die die industriell üblichen Mengen behandeln kann, gibt es noch nicht. Nur viele/mehrere parallele Autoklaven, die auch i. d. R. manuell befüllt werden, könnten den Output bewältigen.
Aufgabe der vorliegenden Erfindung ist es, eine Verpackungsmaschine und ein Verfahren zur Verfügung zu stellen, die den kostengünstigen Einsatz einer Hochdruckbehandlung auch im industriellen Maßstab ermöglichen.
Diese Aufgabe wird gelöst durch eine Verpackungsmaschine mit den Merkmalen des Anspruchs 1 bzw. durch ein Verfahren mit den Merkmalen des Anspruchs 8. Vorteilhafte Weiterbildungen der Erfindung sind in den Unteransprüchen angegeben.
Die erfindungsgemäße Verpackungsmaschine zeichnet sich dadurch aus, dass eine zentrale Steuerung für die Verpackungsstation und die Hochdruckbehandlungsstation vorgesehen ist. Bisher lagen Verpackungsstationen und Hochdruckbehandlungsstationen stets als separate Maschinen vor. Die zentrale Steuerung gemäß der Erfindung ermöglicht es nun, den Betrieb dieser Stationen und den jeweiligen Durchsatz aufeinander abzustimmen, um Wartezeiten der Stationen zu vermeiden. Insbesondere kann die zentrale Steuerung für einen reibungslosen, ggf. synchronisierten Betrieb der Stationen sorgen, um so den Gesamtdurchsatz der Verpackungsmaschine zu erhöhen. Die erzeugten und behandelten Produkte können auf diese Weise kostengünstiger werden, wenn Wartezeiten insbesondere bei der kostenintensiven Hochdruckbehandlungsstation vermieden werden.
Die erfindungsgemäße Verpackungsmaschine kann mehrere Verpackungsstationen und eine einzige Hochdruckbehandlungsstation aufweisen. Dies sorgt zusätzlich dafür, dass die in der Regel kostenintensive Hochdruckbehandlungsstation durchgehend betrieben werden kann, um die Kosten für die verpackten und hochdruckbehandelten Produkte weiter zu senken. Zudem erleichtert dies das Erzeugen unterschiedlicher Verpackungen in der Verpackungsmaschine.

Die Verpackung sorgt bei der Hochdruckbehandlung dafür, dass ein direkter Kontakt zwischen dem zu behandelnden Produkt und dem Hochdruckmedium (bei dem es sich üblicherweise um Wasser handelt) vermieden wird. Außerdem wird so sichergestellt, dass die Produkte nach der Behandlung nicht rekontaminiert werden. Selbst bei einer Reinraumabfüllung besteht immer die Gefahr einer Rekontamination mit bestimmten überall vorkommenden Keimen, wie Listerien. Diese Gefahr steigt, wenn Bedienpersonal eingesetzt werden muss.

Indem die mindestens eine Verpackungsstation gemeinsam mit der Hochdruckbehandlungsstation gesteuert wird, kann ein verketteter, vollautomatischer Betrieb der gesamten Verpackungsmaschine erfolgen, der gegenüber getrennt betriebenen Maschinen einen deutlich höheren Durchsatz ermöglicht. Bei der Verpackungsstation kann es sich beispielsweise um eine Tiefzieh-Verpackungsstation, eine (Kammer-) Bandmaschine oder um eine Schalenverschließmaschine ("Tray-Sealer") handeln. Es ist sogar möglich, dass die Verpackungen vor dem Verschließen und Versiegeln evakuiert und/oder mit einem Schutzgas oder Schutzgasgemisch (beispielsweise Stickstoff oder CO₂) versehen werden. Zusätzlich zur Hochdruckbehandlung verhindert das Schutzgas ein Anwachsen eventuell noch vorhandener Keime und eine Oxidation der Produkte. Insbesondere im Lebensmittelbereich kann durch die Kombination einer Hochdruckbehandlung und einer Schutzgasbehandlung der Produkte die Haltbarkeit dieser Produkte erheblich verlängert werden.

Bevorzugt ist mindestens ein Transportbehälter zur Aufnahme von Produkten während der Hochdruckbehandlung dieser Produkte vorgesehen. Der Transportbehälter fasst eine Vielzahl von Produkten zu einer Gruppe zusammen, die gemeinsam, d. h. im sogenannten "Batch-Betrieb", dem Hochdruck ausgesetzt werden. Diese Betriebsweise bietet sich an, da die Hochdruckkammer der Hochdruckbehandlungsstation druckdicht verschlossen werden muss. Der Transportbehälter erleichtert den Transport der Produkte und erhöht die Geschwindigkeit beim Befüllen und Entladen der Hochdruckkammer.

Günstig ist es, wenn der Transportbehälter ein Untereil und ein Oberteil aufweist, die miteinander verbindbar sind, wobei sowohl das Unterteil, als auch das Oberteil zur Aufnahme mindestens eines Produkts ausgebildet ist. Dies bietet gegenüber herkömmlichen, einstückigen Transportbehältern Vorteile hinsichtlich eines höheren Füllgrads und eines leichteren Be- und Entladens der Transportbehälter, vor allem bei einem automatisiertem Befüllen mit einem Roboter.

Die Hochdruckbehandlungsanlage umfasst vorzugsweise eine Transporteinrichtung zum Transportieren der Transportbehälter von einer Beladestation in eine Hochdruckkammer, weiter zu einer Entladestation und zurück zur Beladestation. Bei dieser Transporteinrichtung kann es sich um eine Gruppe von angetriebenen Transportbändern oder Rollen handeln, die gemeinsam einen ringförmig geschlossenen Transportweg definieren können.

Das Beladen und Entladen des Transportbehälters kann manuell erfolgen. Diese Vorgänge können jedoch schneller ablaufen, wenn an der Beladestation und/oder an der Entladestation ein Roboter oder Greifer zum automatischen Be- bzw. Entladen des Transportbehälters vorgesehen ist. Beispielsweise könnte der Greifer über eine Saugeinrichtung verfügen, um die Produkte bzw. ihre Verpackungen durch Ansaugen temporär festzuhalten.

In der Hochdruckbehandlungsstation können mehrere Hochdruckkammern vorgesehen sein, die dennoch über ein gemeinsames Druckerzeugersystem mit unter Druck gesetztem Hochdruckmedium versorgt werden. Überraschenderweise hat sich gezeigt, dass bei geeignetem Betrieb der Hochdruckkammern, beispielsweise einem zeitlich versetzten Betrieb, ein einziges Druckerzeugersystem für die Versorgung mehrerer Hochdruckkammern ausreichen kann. Da das Druckerzeugersystem mehrere Hochdruckkammern bedient, kann es quasi unter Dauerlast betrieben werden. Auf diese Weise verringern sich Druckschwankungen und ein Verschleiß des Druckerzeugersystems. Durch das Versorgen mehrerer Hochdruckkammern mit einem gemeinsamen Druckerzeugersystem lassen sich sowohl beim Errichten der Hochdruckstation, als auch in deren Betrieb beträchtliche Kosteneinsparungen erzielen. Ein weiterer Vorteil der Erfindung liegt darin, dass auch beim Ausfall einer Hochdruckkammer (hier und im Folgenden synonym zum Begriff "Autoklav") immer noch mit der bzw. den anderen Hochdruckkammern und folglich mit mindestens 50% der ursprünglichen Kapazität weiter produziert werden kann. Noch ein weiterer Vorteil liegt darin, dass unterschiedliche Produkte in jeder Kammer ggf. auch unterschiedlich behandelt werden können.

Insbesondere kann die Hochdruckbehandlungsstation genau zwei Hochdruckkammern aufweisen. Das Druckerzeugersystem kann eine oder mehrere Hochdruckpumpen sowie eine oder mehrere Niederdruckpumpen umfassen.

Vorzugsweise umfasst das Druckerzeugersystem ein ansteuerbares Druckverteilsystem, mittels dessen der Druck wahlweise an einer der Hochdruckkammern anlegbar ist. Auf diese Weise kann genau gesteuert werden, mit welcher Kurve der Druck in den einzelnen Hochdruckkammern erhöht, gehalten und abgesenkt wird.

Zweckmäßig ist es, wenn mittels des Druckerzeugersystems gleichzeitig an mehreren Hochdruckkammern ein Druck anlegbar ist. So werden Wartezeiten des einen Autoklaven vermieden, die ansonsten bis zum vollständigen Druck-Entlasten des anderen Autoklaven erforderlich sein könnten. Stattdessen ermöglicht diese Variante der Erfindung nicht nur einen abwechselnden, sondern einen zeitlich gestaffelten und sogar teilweise überlappenden Hochdruckbetrieb der Autoklaven. Auf diese Weise kann die mittlere Taktzeit (d. h. die Taktzeit des einzelnen Autoklaven geteilt durch die Anzahl der Autoklaven) verkürzt werden.

Besonders günstig ist es für diesen Zweck, wenn mittels des Druckerzeugersystems gleichzeitig an zwei Hochdruckkammern unterschiedliche Drücke anlegbar sind. Dadurch wird der zeitlich gestaffelte Betrieb der Hochdruckkammern weiter begünstigt.

In einer Variante der Erfindung weist das Druckerzeugersystem eine Einrichtung zum Aufrechterhalten eines Hochdrucks in einer Hochdruckkammer auf. Diese Einrichtung sorgt dafür, den Hochdruck bzw. Maximaldruck in der Hochdruckkammer aufrechtzuerhalten, auch wenn das Druckerzeugersystem gleichzeitig für das Ansteigen des Drucks in einer anderen Hochdruckkammer sorgt. Der Hochdruck kann dabei entweder einem zentralen Druckerzeuger des Druckerzeugersystems entnommen werden, oder aber einer separaten Hochdruckpumpe, die während der Haltezeit des Hochdrucks an die Hochdruckkammer angeschlossen wird.

Denkbar ist es, die zentrale Steuerung an ein Betriebsdatenerfassungssystem anzuschließen, um - beispielsweise zu Wartungszwecken - die Betriebsparameter der Verpackungsmaschine zu erfassen oder die Qualität der behandelten Produkte zu dokumentieren.

Die Abstimmung des Betriebsablaufs der Verpackungsmaschine, insbesondere die Synchronisation einer Verpackungsstation und der Hochdruckstation, kann erleichtert werden, indem z. B. an der Beladestation ein Speicherbereich zum Speichern einer Vielzahl von Produkten vorgesehen ist. Dadurch können die Produkte quasi-kontinuierlich an diesen Speicherbereich angeliefert werden, obwohl sie anschließend gruppenweise aus dem Speicherbereich in einen Transportbehälter umgeladen werden. So könnte einerseits die Verpackungsstation die laufend in der Hochdruckbehandlungsstation behandelbaren Verpackungen kontinuierlich produzieren (ggf. in Abhängigkeit der von der Hochdruckstation gelieferten Betriebsdaten). Andererseits kann die Verpackungsstation so viele Packungen produzieren und in den Speicherbereich übergeben, sodass dieser stetes gefüllt ist. Selbst bei einem Stopp der Verpackungsstationen, beispielsweise für einen Rüstvorgang auf eine neue Folie, ergibt sich kein Stillstand der kostenintensiven Hochruckbehandlungsstation. In diesem Fall kann nämlich der Speicher die Hochdruckbehandlungsstation weiter mit Verpackungen versorgen. Da ein Stillstand der Hochdruckbehandlungsstation vermieden wird, wird die Effizienz der Verpackungsmaschine weiter gesteigert.

Zweckmäßig ist ein Prüfsystem zum Untersuchen der Produkte und/oder ihrer Verpackungen auf Schäden oder Mängel. Das Prüfsystem könnte eine Gewichtsmessung durchführen, um untergewichtige oder leere Verpackungen zu ermitteln, eine Metalldetektion zum Ermitteln von metallischen Rückständen an den Produkten, und/oder eine optische Inspektion im Hinblick auf Mängel oder Schäden an Produkt oder Verpackung, beispielsweise eine fehlerhafte Etikettierung. Auch Schäden am Produkt oder der Verpackung, die möglicherweise bei der Hochdruckbehandlung bewirkt werden, können so erkannt werden.

Aussortiereinrichtungen können dafür sorgen, schadhafte oder mangelhafte Produkte oder Verpackungen auszusortieren, damit diese nicht unnötig dem zeit- und kostenintensiven Hochdruckverfahren ausgesetzt werden müssen. Ein Prüfen und Aussortieren der Produkte und Verpackungen kann sowohl vor dem Beladen des Transportbehälters, als auch nach dem Entladen eines Transportbehälters erfolgen.

Ein vollautomatischer Betrieb der Verpackungsmaschine mit maximalem Durchsatz kann erleichtert werden, wenn möglichst viele weitere Komponenten der Anlage an die zentrale Steuerung angeschlossen sind, insbesondere die Transporteinrichtung, der Greifer, das Prüfsystem und/oder die Aussortiereinrichtung.

Die Erfindung bezieht sich auch auf ein Verfahren zum Betrieb einer Verpackungsmaschine zum Verpacken von Produkten, insbesondere von Lebensmitteln, in wenigstens einer Verpackungsstation und zur anschließenden Hochdruckbehandlung der verpackten Produkte in wenigstens einer Hochdruckbehandlungsstation. Die Erfindung zeichnet sich durch das aufeinander abgestimmte Ansteuern der Verpackungsstation(en) und der Hochdruckbehandlungsstation(en) mittels einer gemeinsamen Steuerung aus. Wie bereits ausführlich erläutert, gewährleistet dies einen reibungslosen Betrieb der Verpackungsmaschine bei einem sehr hohen Durchsatz, sodass sich auch industriellen Maßstab und damit vergleichsweise kostengünstig Produkte verpacken und hochruckbehandeln lassen.

Günstig ist es, wenn bereits verpackte Produkte in einem Speicherbereich zwischen der Verpackungsstation und der Hochdruckbehandlungsstation gespeichert werden. Auf diese Weise können stets genügend Verpackungen vorhanden sein, um einen unerwünschten und kostenintensiven Stillstand der Hochdruckbehandlungsstation zu vermeiden.

Zweckmäßigerweise ist die gemeinsame Steuerung dazu eingerichtet, die Zahl der pro Zeiteinheit in den Verpackungsstationen erzeugten Verpackungen an die Zahl der pro Zeiteinheit in den Hochdruckbehandlungsstationen hochdruckbehandelten Verpackungen anzugleichen. In einem vollautomatischen Betrieb können dabei auch die in einem Speicherbereich gespeicherten Verpackungen berücksichtigt werden. Insgesamt werden auf diese Weise Wartezeiten der unterschiedlichen Komponenten der Verpackungsmaschine weitgehend vermieden.

In einem speziellen Ausführungsbeispiel können die Verpackungsstationen und die Hochdruckbehandlungsstationen mittels der Steuerung auch synchron zueinander betrieben werden.

In einer Variante der Erfindung sind mindestens zwei Hochdruckkammern vorgesehen, die über ein gemeinsames Druckerzeugersystem mit Hochdruckmedium versorgt werden. Die Erfindung zeichnet sich dann dadurch aus, dass die Hochdruckkammern in unterschiedlicher oder zeitlich versetzter Taktung betrieben werden. Dies ermöglicht einen quasikontinuierlichen Betrieb des Druckerzeugersystems, mit entsprechenden Vorteilen hinsichtlich geringerer Druckschwankungen, geringeren Wartungsaufwands und geringeren Betriebskosten. Der asynchrone oder der zeitlich versetzte Betrieb der Hochdruckammer führen zudem im Vergleich zu einem synchronen Betrieb zu einem gleichmäßigeren Ausstoß an behandelten Produkten, sodass auch der Betrieb von nachgeordneten Bearbeitungsvorrichtungen (beispielsweise Etikettier- oder Umverpackungsvorrich-tungen) erleichtert wird.

Vorzugsweise werden die Hochdruckkammern so mit unter Druck gesetztem Hochdruckmedium versorgt, dass stets in höchstens einer der Hochdruckammern der für die Behandlung der Produkte eingestellte Maximaldruck vorliegt und/oder dass stets in höchstens einer der Hochdruckkammern der Druck zum Hochdruck aufgebaut wird. Auf diese Weise wird die erforderliche Pumpenleistung des Druckerzeugersystems begrenzt, sodass das Druckerzeugersystem kleiner dimensioniert werden kann und kostengünstiger ist.

In einer speziellen Variante des Verfahrens beginnt in einer der Hochdruckkammern der Aufbau des Hochdrucks, nachdem oder genau wenn in einer anderen Hochdruckkammer der Aufbau des Hochdrucks abgeschlossen ist. Auf diese Weise wird ein gleichmäßiger, quasikontinuierlicher Betrieb des Druckerzeugersystems weiter begünstigt. Alternativ könnte der Druckaufbau in den Hochdruckkammern jedoch auch zumindest teilweise parallel erfolgen.

In einer Verfahrensvariante ist es denkbar, in einer Hochdruckkammer mehrere Druckzyklen in Folge durchzuführen. Durch die mehrfache Hochdruckbehandlung der in der Hochdruckkammer enthaltenen Produkte erfolgt dann nicht nur eine Pasteurisierung, sondern sogar eine Sterilisierung, d. h. eine vollständige Abtötung der Keime und Mikroorganismen. Im Hinblick auf die Synchronisation der Hochdruckkammern ist es möglich, dass jeder der Druckzyklen einem normalen Arbeitstakt der Hochdruckkammer entspricht.

Bereits erläutert wurde, dass vor und/oder nach der Hochdruckbehandlung eine automatische Prüfung der Produkte oder ihrer Verpackungen auf Schäden oder Mängel erfolgt. Insbesondere kann auf diese Weise eine unnötige Hochdruckbehandlung von mangel- oder schadhaften Produkten vermieden werden.

Im Folgenden werden vorteilhafte Ausführungsbeispiele der Erfindung anhand einer Zeichnung näher erläutert. Im Einzelnen zeigen:
- Figur 1: eine schematische Ansicht der gesamten Verpackungsmaschine,
- Figur 2: ein Ausschnitt der in Figur 1 gezeigten Maschine im Bereich der Beladestation,
- Figur 3: ein zweites Ausführungsbeispiel der Verpackungsmaschine, bei der eine gemeinsame Transportbehälter-Ladestation für zwei Verpackungsstationen vorgesehen ist,
- Figur 4: eine schematische Ansicht der Hochdruckkammern in der Hochdruckbehandlungsstation,
- Figur 5: ein Ausschnitt der in Figur 1 gezeigten Maschine im Bereich der Entlade-station, und
- Figur 6: eine schematische Darstellung des getakteten Betriebs der beiden in Figur 1 gezeigten Hochdruckkammern.

Gleiche Komponenten werden in den Figuren durchgängig mit gleichen Bezugszeichen versehen.

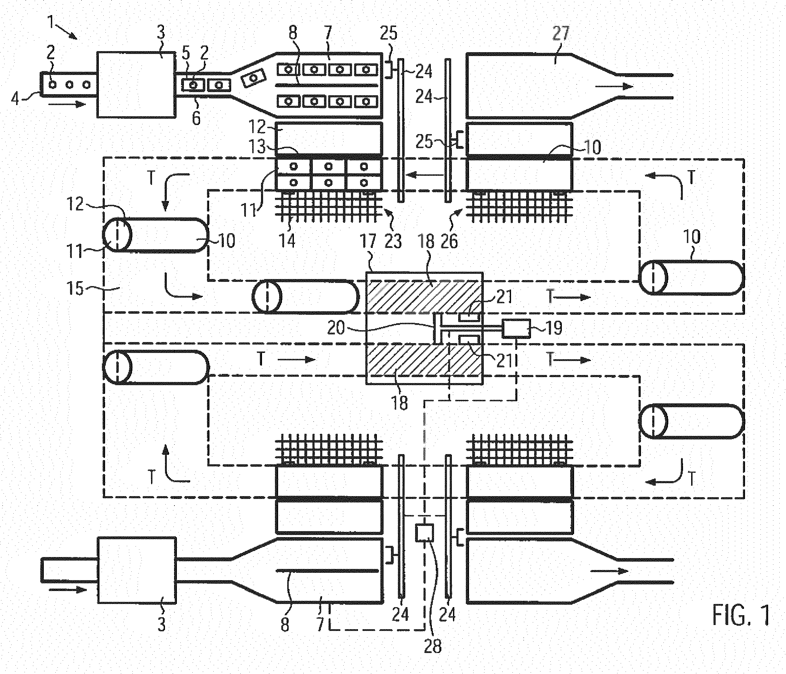

Figur 1 zeigt in schematischer Übersicht eine erfindungsgemäße Verpackungsmaschine zum Verpacken und Hochdruckbehandeln von Produkten 2. Bei den Produkten 2 kann es sich insbesondere um Lebensmittel handeln, deren Haltbarkeitsdauer durch die Hochdruckbehandlung verlängert wird und/oder deren Eigenschaften, wie die Viskosität, gezielt positiv beeinflusst werden.

Das in Figur 1 gezeigte Ausführungsbeispiel der erfindungsgemäßen Verpackungsmaschine 1 umfasst zwei Verpackungsstationen 3. Bei den Verpackungsstationen 3 kann es sich beispielsweise um Tiefzieh-Verpackungsstationen, (Kammer-) Bandmaschinen oder sogenannte "Tray-Sealer" handeln. Die beiden Verpackungsstationen 3 können vom gleichen oder von einem unterschiedlichen Typ sein. Ein Förderband 4 (oder eine andere geeignete Fördereinrichtung) nimmt die Produkte 2 auf, beispielsweise in bereits (vor-) geformten Unterschalen einer Verpackung, und befördert die Produkte 2 in die Verpackungsstation 3 hinein.

In der Verpackungsstation 3 wird eine gasdicht geschlossenen Verpackung 5 um jedes Produkt gebildet. Bevor eine Verpackung 5 geschlossen wird, kann sie in der Verpackungsstation 3 evakuiert und mit einem Schutz- oder Austauschgas gespült werden, beispielsweise Stickstoff und/oder CO₂, welches die Luft in der Verpackung ersetzt und die Haltbarkeit des Produkts 2 verlängert.

Über ein weiteres Förderband 6 gelangen die verpackten Produkte 2 von der Verpackungsstation 3 zu einem Speicherbereich 7. Der Speicherbereich 7 ist groß genug, um eine Vielzahl von Produkten 2 bzw. Verpackungen 5 aufzunehmen. Im Speicherbereich 7 kommen die mittels des Förderbandes 6 zugeführten Produkte 2 bzw. Ver-packungen 5 zur Ruhe. Im Speicherbereich 7 können Führungsmittel 8 vorgesehen sein, um die Verpackungen 5 in definierter Weise auszurichten, und um die Verpackungen 5 in unterschiedliche Fächer des Speicherbereichs 7 zu führen.

Die erfindungsgemäße Maschine 1 weist eine Vielzahl von Transportbehältern 10 auf. Jeder Transportbehälter 10 weist ein halbzylindrisches Unterteil 11 und ein ebenfalls halbzylindrisches Oberteil 12 auf, die über ein Scharnier 13 schwenkbar übereinander verbunden sind. In einer geschlossenen Stellung setzen sich die beiden Teile 11, 12 zu einem zylindrischen Transportbehälter 10 zusammen. In einer geöffneten Stellung, in der der Transportbehälter 10 in Figur 1 benachbart zum Speicherbereich 7 dargestellt ist, sind die beiden Teile 11, 12 nach oben frei zugänglich. Der Transportbehälter 10 weist ferner ein Halteelement 14 auf, das über ein weiteres Scharnier mit einem der beiden Teile 11, 12 verbunden ist, und das im Ausführungsbeispiel als Sicherungsgitter ausgebildet ist. Solch ein Halteelement 14 kann auch sowohl am Unterteil 11, als auch am Oberteil 12 vorgesehen sein. Es dient dazu, die in die beiden Teile 11, 12 des Transportbehälters 10 eingelegten Produkte 2 bzw. Verpackungen 5 vor einem Verrutschen bzw. einer Verlagerung zu sichern, wenn der Transportbehälter 11 geöffnet oder geschlossen wird, z. B. beim Zusammenklappen der beiden Hälften des Transportbehälters 10.

Mittels einer Transporteinrichtung 15, beispielsweise einer Gruppe von zusammenwirkenden Transportbändern, können die Transportbehälter 10 jeweils entlang eines ringförmig geschlossenen Transportweges befördert werden. Die Transportrichtung T ist in Figur 1 mit mehreren Pfeilen angedeutet. Üblicherweise wird der Transport schrittweise bzw. intermittierend erfolgen.

Kernstück der erfindungsgemäßen Verpackungsmaschine 1 ist eine als Doppel-Autoklav ausgebildete Hochdruckbehandlungsstation 17, die über zwei gasdicht verschließbare Hochdruckkammern 18 verfügt. Jede Hochdruckkammer 18 entspricht in ihrer Größe etwa einem ganzzahligen Vielfachen des Volumens eines Transportbehälters 10. Beispielsweise kann eine Hochdruckkammer 18 einen, zwei oder drei Transportbehälter 10 gleichzeitig aufnehmen, damit die in den Transportbehältern 10 aufgenommenen Produkte 2 dem Druck eines Hochdruckmediums ausgesetzt werden können.

Im Ausführungsbeispiel ist ein gemeinsames Druckerzeugersystem 19 vorgesehen, mittels dessen der Druck des Hochdruckmediums in beiden Hochdruckkammern 18 erzeugt und eingestellt wird. Das Druckerzeugersystem 19 verfügt über eine Vielzahl von Nieder- und Hochdruckpumpen für das Hochdruckmedium. Zudem kann ein Reservoir für das Hochdruckmedium vorhanden sein.

Über ein schematisch gezeigtes Druckverteilsystem 20 wird das Hochdruckmedium wahlweise an die beiden Hochdruckkammern 18 geführt. Entsprechende Schaltmittel und Ventile im Druckverteilsystem 20 sorgen für die Regelung des Drucks an den beiden Hochdruckkammern 18. Das Druckverteilsystem 20 ist so ausgelegt, dass an den beiden Hochdruckkammern 18 gleichzeitig unterschiedliche Drücke angelegt werden können.

Zum Druckerzeugersystem 19 gehört auch eine Einrichtung 21 zum Aufrechterhalten des Hochdrucks in einer Hochdruckkammer 18. Bei der Einrichtung 21 kann es sich um eine separate Hochdruckpumpe 21 handeln, die jeweils einer der beiden Hochdruckkammern 18 zugeordnet ist. Die Einrichtung 21 dient dazu, Druckverluste z. B. durch Temperaturschwankungen in einer der Hochdruckkammern 18 während der Haltezeit des Maximaldrucks auszugleichen, während das Druckverteilsystem 20 gleichzeitig für den Druckaufbau in der anderen Hochdruckkammer 18 sorgt.

An einem benachbart zum Speicherbereich 7 entlang der Transporteinrichtung 15 vorgesehenen Beladebereich 23 können die geöffneten Transportbehälter 10 mit Produkten 2 beladen werden. Zu diesem Zweck ist ein Greifer 24 vorgesehen, der mittels einer Greif- oder Saugeinrichtung 25 eine oder gleichzeitig mehrere Verpackungen 5 erfassen und vom Speicherbereich 7 in den offenen Transportbehälter 10 umladen kann. Auf der in Transportrichtung T stromabwärts gelegenen Seite des Autoklaven 17 ist in analoger Weise eine Entladestation 26 vorgesehen, in der die geöffneten Transportbehälter 10 entladen werden. Auch an der Entladestation 26 ist ein Greifer 24 mit einer Greif- oder Saugeinrichtung 25 vorgesehen, um die Produkte 2 (hier nicht dargestellt) aus dem geöffneten Transportbehälter 10 zu entnehmen und auf ein Abführband 27 umzuladen.

Sinnvoll ist es, wenn Mittel vorgesehen sind (z. B. mechanische oder pneumatische Mittel), um die Transportbehälter 10 und ggf. auch die Halteelemente 14 außerhalb der Be- und Entladestationen 23, 26 zu schließen bzw. zu öffnen. Bei einem taktweisen bzw. intermittierenden Betrieb der Transporteinrichtung 15 könnten die Mittel zum automatischen Schließen des Transportbehälters 10 beispielsweise an derjenigen Stelle vorgesehen sein, die der Transportbehälter 10 einen Arbeitstakt später als die Beladestation 23 erreicht. Die Mittel zum automatischen Öffnen des Transportbehälters 20 könnten analog an derjenigen Stelle entlang der Transporteinrichtung 15 vorgesehen sein, die der Transportbehälter 10 einen Arbeitstakt vor Erreichen der Entladestation 23 erreicht. Wenn das Öffnen und Schließen des Transportbehälters 10 nicht an der Be- und Entladestation 23, 26 selbst erfolgt, lässt sich ggf. die Taktzeit der Verpackungsmaschine 1 verkürzen. Falls ohnehin genügend Zeit zur Verfügung steht, kann das Schließen bzw. Öffnen des Behälters jedoch auch an der Beladestation 23 bzw. an der Entladestation 26 selbst erfolgen.

Zum Steuern der Verpackungsmaschine 1 bzw. ihrer Komponenten ist eine zentrale Steuerung 28 vorgesehen. Über Daten- und Steuerleitungen 29 ist die Steuerung 28 mit den unterschiedlichen Komponenten der Hochdruckbehandlungsanlage 1 verbunden. In Figur 1 ist angedeutet, dass die Steuerung 28 unter Anderem mit den Verpackungsstationen 3, dem Druckerzeugersystem 19, dem Druckverteilsystem 20 und den Greifern 24 an der Be- und Entladestation 23, 26 verbunden ist. Darüber hinaus ist die Steuerung 28 auch mit der Transporteinrichtung 15 und weiteren, in Figur 1 nicht dargestellten Komponenten der Verpackungsmaschine 1 verbunden. Insbesondere kann sie an ein Betriebsdatenerfassungssystem (BDE-System) angebunden sein, um den Betrieb der Verpackungsmaschine 1 zu überwachen und die Qualität der Ergebnisse der Hochdruckbehandlung zu sichern und zu kontrollieren.

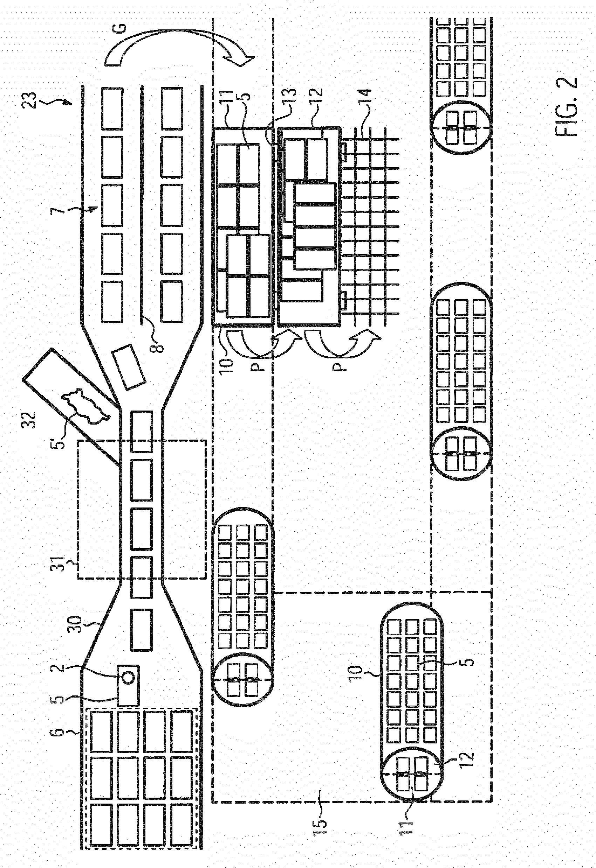

Figur 2 zeigt einen vergrößerten Ausschnitt der Verpackungsmaschine 1 aus Figur 1 im Bereich der Beladestation 23.

Vergrößert dargestellt ist hier insbesondere der Bereich zwischen dem Förderband 6, das sich an die Verpackungsstation 3 anschließt, und dem Speicherbereich 7. Auf dem Förderband 6 werden die verpackten Produkte 2 zunächst mehrspurig transportiert, da sie auch in der vorgeschalteten Verpackungsstation 3 mehrspurig erzeugt werden. Im Ausführungsbeispiel nach Figur 2 werden die Verpackungen 5 beispielsweise in vier nebeneinander liegenden Spuren transportiert. Eine Vereinzelungseinrichtung 30, beispielsweise geeignet geformte Führungswände, sorgen für eine Verringerung der Anzahl der Spuren, bis hin zu einer Vereinzelung der Verpackungen 5. Auf diese Weise können die Verpackungen 5 einzeln einem Prüfsystem 31 zugeführt werden. Das Prüfsystem 31 verfügt über geeignete Sensoren, um das Gewicht der Verpackungen 5, vor allem auch Leerpackungen, Metallrückstände und/oder andere Schäden und Mängel am Produkt 2 oder der Verpackung 5 zu ermitteln. Auf diese Weise können schadhafte oder mangelhafte Verpackungen 5' erkannt und mittels Aussortiereinrichtungen 32 aus dem Verarbeitungsprozess entnommen werden.

Die fehlerfreien Verpackungen 5 hingegen gelangen zum Speicherbereich 7. Dort werden sie vom Greifer 24 erfasst und - wie durch den Pfeil G angegeben - in den geöffneten Transportbehälter 10 geladen. Die beiden Pfeile P deuten an, wie das Oberteil 12 des Transportbehälters 10 relativ zum Unterteil 11 um das Scharnier 13 geöffnet wurde, und wie das Halteelement 14 relativ zum Oberteil 12 geöffnet wurde. In Figur 2 ist zu sehen, dass die Verpackungen 5 teilweise überlappend im Transportbehälter 10 gestapelt werden.

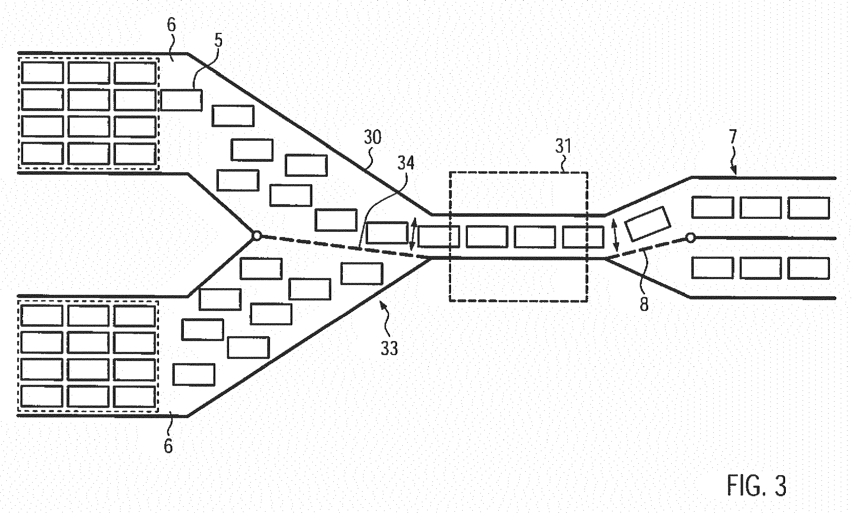

Figur 3 zeigt schematisch eine abgewandelte Form der Vereinzelungseinrichtung 30, bei der von zwei unterschiedlichen Förderbändern 6 Produkte 2 bzw. Verpackungen 5 herangeführt werden. Jedes der Förderbänder 6 ist einer Verpackungsstation 3 zugeordnet. Die Verpackungsstationen 3 können vom gleichen oder von unterschiedlichem Typ sein. Im Bereich der Vereinzelungseinrichtung 30 nach Figur 3 befindet sich eine Weiche 33, an der die Förderwege der beiden Förderbänder 6 vereinigt werden. Ein ansteuerbares Absperrmittel 34, in diesem Fall ein schwenkbares Führungsmittel, gibt wahlweise den Transportweg von einem der beiden Förderbänder 6 zur Vereinzelungseinrichtung 30 frei, sodass die vereinzelten Verpackungen 5 dem Prüfsystem 31 zugeführt werden können. Die Variante gemäß Figur 3 bietet sich an, wenn die Kapazität der Verpackungsmaschine 1 zum Verarbeiten von zusätzlichen Produkten 2 ausreicht, oder wenn auf den den beiden Förderbändern 6 vorgeschalteten Verpackungsstationen 3 unterschiedliche Produkte 2 bzw. Verpackungen 5 erzeugt werden sollen.

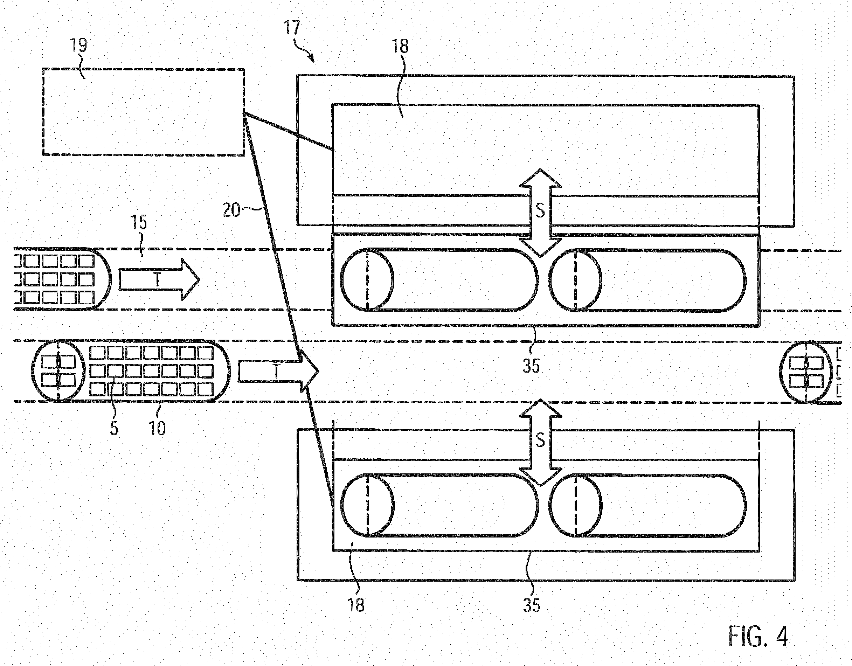

Figur 4 zeigt einen vergrößerten Ausschnitt der Hochdruckbehandlungsstation 17 der erfindungsgemäßen Verpackungsmaschine 1. Auf jeder der beiden Seiten verfügt die Hochdruckstation 17 über ein kastenförmiges Joch, in das ein zylinderförmiger Autoklav 35 seitlich eingesetzt werden kann. Jeder der beiden seitlich in Pfeilrichtung S verfahrbaren Autoklaven 35 ist gerade groß genug, um zwei Transportbehälter 10 aufnehmen zu können. Sobald zwei Transportbehälter 10 in Axialrichtung in den Autoklaven 35 eingeschoben wurden, wird der Autoklav 35 seitlich in Richtung des Pfeils S verschoben und so in das Joch eingebracht. Gemeinsam mit dem Joch, das den Autoklaven 35 auf beiden Seiten verschließt, definiert der Autoklav 35 nun die Hochdruckkammer 18.

Figur 4 deutet bereits an, dass die beiden Hochdruckkammern 18 der Hochdruckstation 17 auch bei gleicher Taktzeit zeitlich versetzt zueinander betrieben werden können. Während der obere Autoklav 35 außerhalb des Jochs angeordnet ist, um be- oder entladen zu werden, befindet sich der untere Autoklav 35 in dem ihm zugeordneten Joch. Dadurch ist die durch das Joch und den unteren Autoklaven 35 gebildete Hochdruckkammer 18 geschlossen, sodass in dieser Hochdruckkammer 18 eine Hochdruckbehandlung der Produkte 2 durchgeführt werden kann.

Als Alternative zu der in Figur 4 gezeigten Variante ist es denkbar, dass die Hochdruckkammern 18 nicht seitlich versetzt zur Transporteinrichtung 15, sondern direkt in Förderrichtung der Transporteinrichtung 15 liegen. Mittels der Transporteinrichtung 15 oder eines anderen Förderelements, beispielsweise eines Schiebers, könnten die zylindrischen Transportbehälter 10 geradeaus in die ebenfalls zylindrische Hochdruckkammer 18 eingefahren bzw. nach der Hochdruckbehandlung aus der Hochdruckkammer 18 entfernt werden.

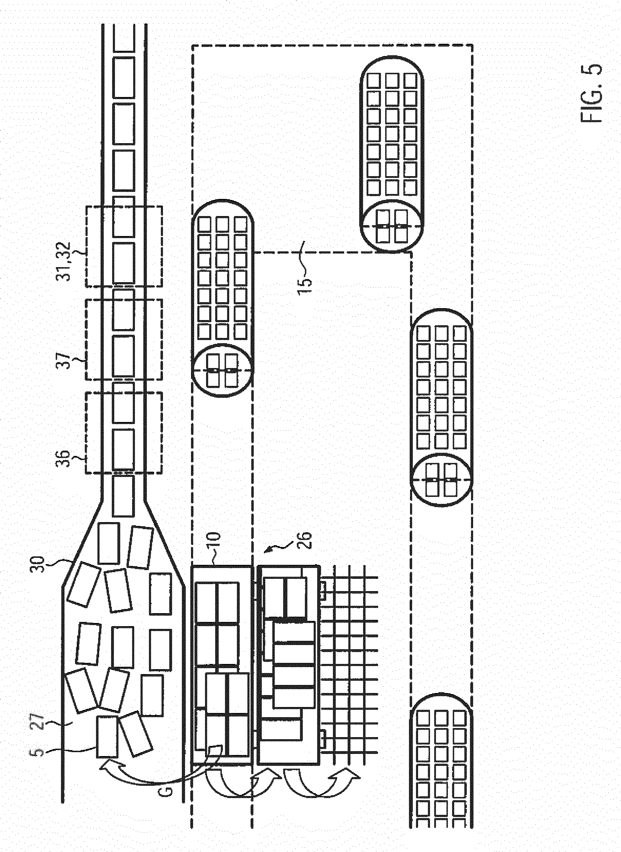

Figur 5 zeigt einen vergrößerten Ausschnitt der Verpackungsmaschine 1 im Bereich der Entladestation 26. In der Entladestation 26 oder ggf. bereits vorher entlang der Transporteinrichtung 15 werden die Transportbehälter 10 geöffnet. Der Greifer 24 sorgt durch die mit dem Pfeil G angedeutete Bewegung für das Entladen des Transportbehälters 10. Die entladenen Verpackungen 5 werden auf einem Abführband 27 abgelegt. Eine Vereinzelungseinrichtung 30 sorgt für ein Ausrichten und Vereinzeln der Verpackungen 5.

Stromabwärts der Vereinzelungseinrichtung 30 sind eine Vielzahl von weiteren Verarbeitungsstationen vorgesehen: ein Trockner 36 zum Trocknen der Verpackungen 5, d. h. zum Entfernen des ggf. noch an den Verpackungen 5 anhaftenden Hochdruckmediums (üblicherweise Wasser), eine Etikettier- und Auszeichnungsstation 37, sowie ein Prüfsystem 31 mit Aussortiereinrichtungen 32, um mangel- oder schadhafte Produkte 2 oder Verpackungen 5 erkennen und aussortieren zu können.

Im Folgenden werden der Betrieb der erfindungsgemäßen Verpackungsmaschine 1 bzw. der Ablauf des erfindungsgemäßen Verfahrens anhand des Weges eines Produkts 2 durch die Verpackungsmaschine 1 anhand eines Ausführungsbeispiels beschrieben.

Das Produkt 2 wird auf dem ersten Förderband 4 in das Unterteil einer Verpackung 5 eingelegt, beispielsweise in eine tiefgezogene Mulde in einer durchgehenden Folienbahn, oder in bereits vereinzelte, vorgeformte Schalen. Das Förderband 4 transportiert das Produkt 2 in die Verpackungsstation 3. In der Verpackungsstation 3 wird die Verpackung 5 evakuiert und/oder mit einem Austauschgas gespült, bevor sie gasdicht versiegelt und verschlossen wird.

Das zweite Förderband 6 transportiert die fertigen Verpackungen 5 von der Verpackungsstation 3 zur Vereinzelungseinrichtung 30, an der eine einzelne Spur von Verpackungen 5 erzeugt wird. Zwischen der Verpackungsstation 3 und der Vereinzelungseinrichtung 30 können Trenn- und Schneidvorrichtungen vorhanden sein, um die eventuell noch miteinander verbundenen Verpackungen 5 voneinander zu trennen.

Die mittels der Vereinzelungseinrichtung 30 vereinzelten Verpackungen 5 gelangen zum Prüfsystem 31, bei dem unterschiedliche Eigenschaften der Produkte 2 oder ihrer Verpackungen 5 überprüft werden, beispielsweise Gewicht, Aussehen, das Fehlen eines Produkts oder das Vorhandensein von Metallrückständen. Schad- oder mangelhafte Verpackungen 5' werden durch das Prüfsystem 31 erkannt und über die Aussortiereinrichtungen 32 aus dem Prozess entnommen.

Die übrigen Verpackungen 5 gelangen zum Speicherbereich 7. Die Führungsmittel 8 sorgen für eine Ausrichtung der Verpackungen 5 und für eine Verteilung auf die unterschiedlichen Fächer des Speicherbereichs 7. Die ausgerichteten Verpackungen 5 werden nun mittels des Greifers 24 erfasst und in einen geöffneten Transportbehälter 10 eingefüllt. Zu diesem Zweck ist das Oberteil 12 des Transportbehälters 10 relativ zum Unterteil 11 um das Scharnier 13 aufgeschwenkt worden, und das Halteelement 14 ist relativ zum Oberteil 12 ebenfalls in Richtung P aufgeschwenkt worden.

Der Speicherbereich 7 nimmt kontinuierlich Produkte auf und sorgt so dafür, dass die Arbeitstakte der Hochdruckstation 17 und der Verpackungsstationen 3 nicht notwendigerweise exakt zueinander synchronisiert werden müssen. Auch bei Schwankungen in der Produktivität der Verpackungsstationen 3, beispielsweise bei einem Umrüsten oder Reinigen der Verpackungsstationen 3, können im Speicherbereich 7 stets genügend Produkte 2 vorhanden sein, um die Hochdruckstation 17 "kontinuierlich" beschicken zu können.

Sobald Unter- und Oberteil 11, 12 des Transportbehälters 10 gefüllt sind, wird zunächst das Halteelement 14 zum Verschließen des Oberteils 12 zurückverschwenkt, um die im Oberteil 12 enthaltenen Verpackungen 5 vor einem Verrutschen zu sichern. Anschließend wird das Oberteil 12 um das Scharnier 13 auf das Unterteil 11 verschwenkt, wodurch der Transportbehälter 10 geschlossen wird. In der geschlossenen, zylindrischen Form des Transportbehälters 10 kann das Oberteil 12 relativ zum Unterteil 11 verriegelt werden.

Im Anschluss befördert die Transporteinrichtung 15 den verschlossenen, aber mit Öffnungen für den Durchtritt von Hochdruckmedium versehenen Transportbehälter 10 zur Hochdruckstation 17. Einer oder mehrere Transportbehälter 10 werden gemeinsam in die geöffnete Hochdruckkammer 18 eingebracht. Dieses Einbringen kann über einen Schieber in Axialrichtung der Transporteinrichtung 15 erfolgen.

Nach dem Füllen der Hochdruckkammer 18 wird die Hochdruckkammer 18 mit Hochdruckmedium (üblicherweise Wasser bei Raumtemperatur) geflutet. Das Hochdruckmedium gelangt vom Druckerzeugersystem 19 über das Druckverteilsystem 20 in die jeweilige Hochdruckkammer 18. Denkbar ist es, dass die Hochdruckkammer 18 entlüftet wird, bis sie vollständig mit Hochdruckmedium gefüllt ist. Möglich ist es auch, dass ein oder mehrere Verschlussstopfen der Hochdruckkammer 18 während des Flutens eine erste geschlossenen Stellung einnehmen und nach dem Fluten in eine zweite, tiefere geschlossene Stellung gebracht werden, um so bereits einen Vordruck im Hochdruckmedium zu erzeugen.

Nach dem vollständigen Schließen der Hochdruckkammer 18 wird mittels des Druckerzeugersystems 19 der Druck in der Hochdruckkammer 18 erhöht - typischerweise auf Werte zwischen 400 MPa und 1000 MPa. Das Hochdruckmedium dringt durch die Öffnungen in den Transportbehälter 10 ein und setzt die Verpackungen 5 und die darin enthaltenen Produkte 2 unter Hochdruck. Der Maximaldruck des Hochdruckmediums wird für eine vorgegebene Zeitspanne aufrechterhalten, bevor der Druck wieder abgebaut wird.

Die Verpackungsmaschine 1 wird taktweise betrieben. Der Arbeitstakt sämtlicher Komponenten der Verpackungsmaschine 1, insbesondere der Förderbänder 4, 6, der Verpackungsstationen 3, der Greifer 24, der Transporteinrichtung 15 und des Doppel-Autoklaven 17 inklusive des Druckerzeugersystems 19 werden durch die zentrale Steuerung 28 vorgegeben.

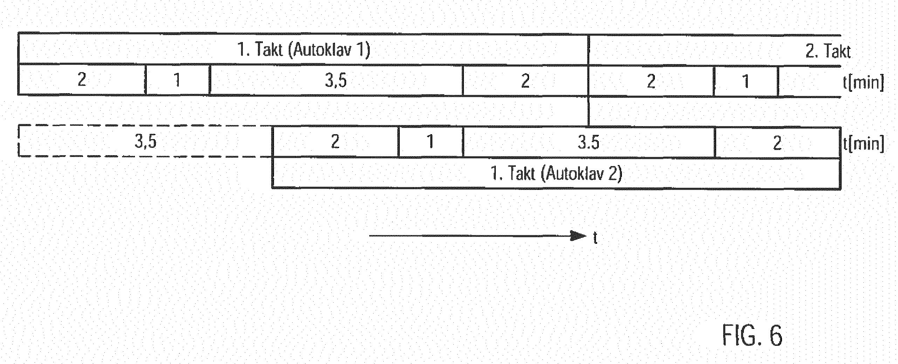

Figur 6 zeigt schematisch einen Ausschnitt aus dem getakteten Betriebsablauf der beiden Autoklaven bzw. Hochdruckkammern 18. Zu Beginn der Produktionsschicht oder Ähnlichem arbeitet nur der erste Autoklav 18. Über einen Zeitraum von zwei Minuten wird der Autoklav 18 geöffnet, entladen, erneut beladen und verschlossen. Im anschließenden Zeitraum von einer Minute wird der erste Autoklav 18 mit Wasser geflutet und gegebenenfalls dabei entlüftet. Danach erfolgt über eine Zeitspanne von 3,5 Minuten der Aufbau des Hochdrucks in der Hochdruckkammer 18 mittels des Druckerzeugersystems 19. Der Maximaldruck wird für weitere 2 Minuten aufrecht erhalten, ggf. unter Zuhilfenahme der Einrichtung 21 für die Aufrechterhaltung des Hochdrucks. Am Ende dieser Zeitspanne von 2 Minuten wird der Druck in der Hochdruckkammer 18 wieder auf Normaldruck abgesenkt. Damit ist der erste Arbeitstakt des ersten Autoklaven 18 abgeschlossen, und der zweite Arbeitstakt beginnt.

Der zweite Autoklav 18 arbeitet mit der gleichen Taktung, aber zeitlich versetzt zum ersten Autoklaven 18. Der erste Arbeitstakt des zweiten Autoklaven 18 beginnt nach einer Wartezeit von 3,5 Minuten relativ zum ersten Autoklaven 18. So wird sichergestellt, dass die Phase des Aufbaus des Hochdrucks im zweiten Autoklaven 18 zu dem Zeitpunkt beginnt, zu dem der erste Autoklav 18 den Maximaldruck erreicht hat. Auf diese Weise kann das Druckerzeugersystem 19 quasi im kontinuierlichen Betrieb laufen.

Denkbar ist es, dass an jeder Hochdruckkammer 18 eine Einrichtung zum Kontrollieren und Regeln des Druckabbaus der Hochdruckmediums vorgesehen ist. Beispielsweise kann die Hochdruckkammer ein Auslassventil zum Auslassen von Hochdruckmedium aus der Hochdruckkammer sowie ein steuerbares Stellglied aufweisen, mittels dessen die Rate des Druckabbaus in der Hochdruckkammer zumindest über einen vorgegebenen Druckbereich regelbar ist. Die Rate des Druckabbaus könnte stufenlos regelbar sein, und das Stellglied könnte einen Druckübersetzer aufweisen und beispielsweise mittels Druckluft steuerbar sein. Auf diese Weise kann erreicht werden, dass der Druckabbau zunächst sehr schnell erfolgt, in einem vorgegebenen Druckbereich jedoch deutlich verlangsamt wird, um so Schäden durch einen zu schnellen Druckabbau an den Produkten 2 oder ihren Verpackungen 5 zu vermeiden.

Sobald die Hochdruckbehandlung abgeschlossen ist, werden die Transportbehälter 10 wieder aus der Hochdruckkammer 18 herausbefördert und mittels der Transporteinrichtung 15 zur Entladestation 26 gebracht. Auf diesem Weg können die Transportbehälter 10 bereits geöffnet werden. An der Entladestation 26 entnimmt ein Greifer 24 die Verpackungen 5 und setzt sie auf einem Abführband 27 ab. Über eine Vereinzelungseinrichtung 30 gelangen die Verpackungen zu einem Trockner 36, der überschüssiges Hochdruckmedium entfernt. Anschließend bringt ein Etikettierer oder Drucker 37 Etiketten und Auszeichnungen auf den Verpackungen 5 an, bevor die Verpackungen 5 zu einem weiteren Prüfsystem 31 mit Aussortiereinrichtungen 32 gelangen.

Die in Figur 1 gezeigte Verpackungsmaschine 1 ist weitgehend (spiegel-) symmetrisch aufgebaut. Jeder der beiden Hochdruckkammern 18 ist eine Verpackungsstation 3 und ein eigener Kreislauf einer Transporteinrichtung 15 mit einer Gruppe von Transportbehältern 10 zugeordnet. Lediglich die Steuerung der gesamten Verpackungsmaschine 1 erfolgt über die zentrale Steuerung 28, und die Druckerzeugung in den beiden Hochdruckkammern 18 erfolgt über das gemeinsame Druckerzeugersystem 19. Möglich wäre es jedoch, dass nur ein einziger, gemeinsamer Kreislauf einer Transporteinrichtung 15 für die zu beiden Kammern 18 transportierten Transportbehälter 10 vorgesehen wäre.

Ausgehend von den dargestellten Ausführungsbeispielen können die erfindungsgemäße Verpackungsmaschine 1 und das erfindungsgemäße Verfahren in vielfacher Weise abgewandelt werden. Beispielsweise könnten mehr als zwei Hochdruckkammern 18 vorgesehen sein. Die Verpackungsmaschine 1 könnte auch einstückige Transportbehälter 10 verwenden. Denkbar wäre es auch, dass lediglich eine einzige Verpackungsstation 3 vorgesehen ist, und dass die von ihr erzeugten Verpackungen 5 auf die Transportbehälter 10 der beiden Hochdruckkammern 18 verteilt werden. Die in Figur 6 gezeigten Zeitspannen der einzelnen Prozessphasen der Hochdruckkammern 18 sind lediglich beispielhaft und können anders eingestellt werden. Ferner ist es möglich, dass die mehreren Autoklaven 35 nicht in einem gemeinsamen Gehäuse oder Behälter 17 vorgesehen sind, sondern in jeweils eigenen Gehäusen.

## Patentansprüche

1. Verpackungsmaschine (1) zum Verpacken von Produkten (2), insbesondere von Lebensmitteln (2), wobei die Verpackungsmaschine (1) wenigstens eine Hochdruckbehandlungsstation (17) zur Hochdruckbehandlung der in den Verpackungen (5) befindlichen Produkte (2) aufweist, und mindestens ein Transportbehälter (10) zur Aufnahme von Produkten (2) während der Hochdruckbehandlung der Produkte (2) vorgesehen ist, **dadurch gekennzeichnet, dass** die Verpackungsmaschine (1) wenigstens eine Verpackungsstation (3) zum Erzeugen von Produkte (2) aufnehmenden Verpackungen (5) aufweist, dass eine zentrale Steuerung (28) für die Verpackungsstation (3) und die Hochdruckbehandlungsstation (17) vorgesehen ist, und dass an einer Beladestation (23) und/oder an einer Entladestation (26) ein Greifer (24) zum Be- bzw. Entladen des Transportbehälters (10) vorgesehen ist, wobei auch der oder die Greifer (24) mit der zentralen Steuerung (28) verbunden ist bzw. sind.

2. Verpackungsmaschine nach Anspruch 1, **dadurch gekennzeichnet, dass** sie mehrere Verpackungsstationen (3) und eine einzige Hochdruckbehandlungsstation (17) aufweist.

3. Verpackungsmaschine nach wenigstens einem der vorgehenden Ansprüche, **dadurch gekennzeichnet, dass** eine Transporteinrichtung (15), ein Greifer (24) und/oder ein Prüfsystem (31) an die zentrale Steuerung (28) angeschlossen sind.

4. Verpackungsmaschine nach einem der vorangehenden Ansprüche, **dadurch gekennzeichnet, dass** die Hochdruckbehandlungsstation (17) mindestens zwei Hochdruckkammern (18) aufweist, in denen abwechselnd und/oder gleichzeitig Produkte (2) einem Hochdruckmedium aussetzbar sind.

5. Verpackungsmaschine nach Anspruch 4, **dadurch gekennzeichnet, dass** ein gemeinsames Druckerzeugersystem (19) zum Versorgen der Hochdruckkammern (18) mit unter Druck gesetztem Hochdruckmedium vorgesehen ist, wobei das Druckerzeugersystem (19) ein ansteuerbares Druckverteilsystem (20) aufweist, mittels dessen der Druck wahlweise an einer der Hochdruckkammern (18) anlegbar ist.

6. Verpackungsmaschine nach Anspruch 5, **dadurch gekennzeichnet, dass** mittels des Druckerzeugersystems (19) gleichzeitig an zwei Hochdruckkammern (18) unterschiedliche Drücke anlegbar sind.

7. Verpackungsmaschine nach einem der Ansprüche 5 oder 6, **dadurch gekennzeichnet, dass** das Druckerzeugersystem (19) eine Einrichtung (21) zum Aufrechterhalten eines Hochdrucks in einer Hochdruckkammer (18) aufweist.

8. Verfahren zum Betrieb einer Verpackungsmaschine (1) zum Verpacken von Produkten (2), insbesondere von Lebensmitteln (2), in wenigstens einer Verpackungsstation (3) und zur anschließenden Hochdruckbehandlung der verpackten Produkte (2) in wenigstens einer Hochdruckbehandlungsstation (17),
**gekennzeichnet durch** das aufeinander abgestimmte Ansteuern der Verpackungsstation (3) und der Hochdruckbehandlungsstation (17) mittels einer gemeinsamen Steuerung (28),
wobei ferner das Beladen von Transportbehältern (10) mit Produkten (2) und/oder das Entladen der Produkte (2) aus den Transportbehältern (10) automatisch mit einem Greifer (24) durchgeführt wird, der ebenfalls von der gemeinsamen Steuerung (28) gesteuert wird.

9. Verfahren nach Anspruch 8, **dadurch gekennzeichnet, dass** die Verpackungsstation (3) und die Hochdruckbehandlungsstation (17) mittels der gemeinsamen Steuerung (28) synchron zueinander betrieben werden.

10. Verfahren nach Anspruch 8 oder 9, **dadurch gekennzeichnet, dass** die Hochdruckbehandlungsstation (17) mindestens zwei Hochdruckkammern (18) aufweist, in denen die Produkte (2) einem Hochdruckmedium aussetzbar sind, wobei ein gemeinsames Druckerzeugersystem (19) zum Versorgen der Hochdruckkammern (18) mit unter Druck gesetztem Hochdruckmedium vorgesehen ist, und wobei die Hochdruckkammern (18) in unterschiedlicher oder zeitlich versetzter Taktung betrieben werden.

11. Verfahren nach Anspruch 10, **dadurch gekennzeichnet, dass** in einer der Hochdruckkammern (18) der Aufbau des Hochdrucks beginnt, nachdem in einer anderen Hochdruckkammer (18) der Aufbau des Hochdrucks abgeschlossen ist.

12. Verfahren nach einem der Ansprüche 10 oder 11, **dadurch gekennzeichnet, dass** in einer Hochdruckkammer (18) mehrere Druckzyklen in Folge durchgeführt werden.

13. Verfahren nach einem der Ansprüche 8 bis 12, **dadurch gekennzeichnet, dass** vor und/oder nach der Hochdruckbehandlung eine automatische Prüfung der Produkte (2) oder ihrer Verpackungen (5) auf Schäden oder Mängel erfolgt.

## Claims

1. Packaging machine (1) for packaging products (2), in particular food (2), wherein the packaging machine (1) comprises at least one high-pressure treatment station (17) for high-pressure treatment of the products (2) contained in the packagings (5), and
at least one transport container (10) for accommodating products (2) during the high-pressure treatment of the products (2) is provided,
**characterized in that**
the packaging machine (1) comprises at least one packaging station (3) for producing packagings (5) that accommodate products (2), and
**in that** a central control system (28) is provided for the packaging station (3) and the high-pressure treatment station (17), and
**in that** a gripper (24) for loading or unloading the transport container (10) is provided at a loading station (23) and/or at an unloading station (26), wherein the gripper or grippers (24) also is/are connected with the central control system (28).

2. Packaging machine according to claim 1, **characterized in that** it comprises several packaging stations (3) and one single high-pressure treatment station (17).

3. Packaging machine according to any of the preceding claims, **characterized in that** a transport means (15), a gripper (24) and/or an inspection system (31) are connected to the central control system (28).

4. Packaging machine according to one of the preceding claims, **characterized in that** the high-pressure treatment station (17) comprises at least two high-pressure chambers (18) in which products (2) can be subjected to a high-pressure medium alternatingly and/or simultaneously.

5. Packaging machine according to claim 4, **characterized in that** a common pressure generating system (19) is provided for supplying the high-pressure chambers (18) with pressurized high-pressure medium, wherein the pressure generating system (19) comprises an actuated pressure distribution system (20) by means of which the pressure can be selectively applied to one of the high-pressure chambers (18).

6. Packaging machine according to one of claims 4 or 5, **characterized in that** by means of the pressure generating system (19), different pressures can be simultaneously applied to two high-pressure chambers (18).

7. Packaging machine according to one of claims 4 to 6, **characterized in that** the pressure generating system (19) comprises means (21) for maintaining high pressure in a high-pressure chamber (18).

8. Method for operating a packaging machine (1) for packaging products (2), in particular food (2), in at least one packaging station (3), and for a subsequent high-pressure treatment of the packaged products (2) in at least one high-pressure treatment station (17),
**characterized by** a coordinated actuation of the packaging station (3) and the high-pressure treatment station (17) by means of a common control system (28),
wherein further the loading of transport containers (10) with products (2) and/or the unloading of the products (2) from the transport containers (10) is performed automatically using a gripper (24) which is also controlled by the common control system (28).

9. Method according to claim 8, **characterized in that** the packaging station (3) and the high-pressure treatment station (17) are operated in synchronism by means of the common control system (28).

10. Method according to one of claims 8 or 9, **characterized in that** the high-pressure treatment station (17) comprises at least two high-pressure chambers (18) in which the products (2) can be subjected to a high-pressure medium, wherein a common pressure generating system (19) is provided for supplying the high-pressure chambers (18) with pressurized high-pressure medium, and wherein the high-pressure chambers (18) are operated with different or time-staggered timing.

11. Method according to claim 10, **characterized in that** in one of the high-pressure chambers (18), the building up of high pressure begins after the building up of high pressure is completed in another high-pressure chamber (18).

12. Method according to one of claims 10 or 11, **characterized in that** several pressure cycles are performed consecutively in one high-pressure chamber (18).

13. Method according to one of claims 8 to 12, **characterized in that** before and/or after the high-pressure treatment, an automatic inspection of the products (2) or their packagings (5) for damages or deficiencies is accomplished.

## Revendications

1. Machine d'emballage (1) pour emballer des produits (2), notamment des produits alimentaires (2), la machine d'emballage (1) comprenant au moins un poste de traitement haute-pression (17) pour traiter par haute-pression les produits (2) se trouvant dans les emballages (5), et au moins un récipient de transport (10) étant prévu pour accueillir des produits (2) pendant le traitement haute-pression des produits (2),
**caractérisée**
**en ce que** la machine d'emballage (1) comprend au moins un poste d'emballage (3) pour produire des emballages (5) accueillant des produits (2),
**en ce qu'**il est prévu une commande centralisée (28) pour le poste d'emballage (3) et le poste de traitement haute-pression (17),
et **en ce qu'**au niveau d'un poste de chargement (23) et/ou d'un poste de déchargement (26), il est prévu un préhenseur (24) pour charger et respectivement décharger le récipient de transport (10), le ou les préhenseur(s) (24) étant également relié(s) à la commande centralisée (28).

2. Machine d'emballage selon la revendication 1, **caractérisée en ce qu'**elle comprend plusieurs postes d'emballage (3) et un seul poste de traitement haute-pression (17).

3. Machine d'emballage selon l'une au moins des revendications précédentes, **caractérisée en ce qu'**un dispositif de transport (15), un préhenseur (24) et/ou système de vérification ou de contrôle (31) sont raccordés à la commande centralisée (28).

4. Machine d'emballage selon l'une des revendications précédentes, **caractérisée en ce que** le poste de traitement haute-pression (17) présente au moins deux chambres haute-pression (18) dans lesquelles des produits (2) peuvent être exposés alternativement et/ou simultanément à un fluide haute-pression.

5. Machine d'emballage selon la revendication 5, **caractérisée en ce qu'**il est prévu un système générateur de pression (19) commun pour alimenter les chambres haute-pression (18) avec un fluide haute-pression mis sous pression, le système générateur de pression (19) comprenant un système de répartition de pression (20) pouvant être commandé, au moyen duquel la pression peut être appliquée sélectivement à l'une des chambres haute-pression (18).

6. Machine d'emballage selon la revendication 5, **caractérisée en ce qu'**au moyen du système générateur de pression (19), il est possible d'appliquer simultanément des pressions différentes à deux chambres haute-pression (18).

7. Machine d'emballage selon l'une des revendications 5 ou 6, **caractérisée en ce que** le système générateur de pression (19) comprend un dispositif (21) pour maintenir une haute-pression dans une chambre haute-pression (18).

8. Procédé pour faire fonctionner une machine d'emballage (1) pour emballer des produits (2), notamment des produits alimentaires (2), dans au moins un poste d'emballage (3) et pour traiter ensuite par haute-pression les produits (2) emballés, dans au moins un poste de traitement haute-pression (17),
**caractérisé par** la commande mutuellement adaptée du poste d'emballage (3) et du poste de traitement haute-pression (17) au moyen d'une commande commune (28),
le chargement de récipients de transport (10) avec des produits (2) et/ou le déchargement des produits (2) hors des récipients de transport (10), étant par ailleurs effectués de manière automatique à l'aide d'un préhenseur (24), qui est également commandé par la commande commune (28).

9. Procédé selon la revendication 8, **caractérisé en ce que** le poste d'emballage (3) et le poste de traitement haute-pression (17) fonctionnent de manière synchronisée l'un par rapport à l'autre au moyen de la commande commune (28).

10. Procédé selon la revendication 8 ou la revendication 9, **caractérisé en ce que** le poste de traitement haute-pression (17) présente au moins deux chambres haute-pression (18) dans lesquelles des produits (2) peuvent être exposés à un fluide haute-pression, un système générateur de pression (19) commun étant prévu pour alimenter les chambres haute-pression (18) avec un fluide haute-pression mis sous pression, et l'on fait fonctionner les chambres haute-pression (18) selon des cycles différents ou de manière décalée dans le temps.

11. Procédé selon la revendication 10, **caractérisé en ce que** dans l'une des chambres haute-pression (18), l'établissement de la haute-pression débute après achèvement de l'établissement de la haute-pression dans une autre chambre haute-pression (18).

12. Procédé selon l'une des revendications 10 ou 11, **caractérisé en ce que** dans une chambre haute-pression (18) sont effectués plusieurs cycles de pression de manière successive.

13. Procédé selon l'une des revendications 8 à 12, **caractérisé en ce qu'**avant et/ou après le traitement haute-pression, est effectué une vérification ou un contrôle automatique des produits (2) ou de leurs emballages (5), quant à des détériorations ou des imperfections.
